# EUROPÄISCHE PATENTSCHRIFT

(11) **EP 3 691 875 B1**
(45) Veröffentlichungstag und Bekanntmachung des Hinweises auf die Patenterteilung: **06.09.2023**
(21) Anmeldenummer: 18808325.7
(22) Anmeldetag: 23.11.2018
(51) Int. Cl.: B29C 65/14

(54) **VERFAHREN UND VORRICHTUNG ZUM VERBINDEN VON MINDESTENS ZWEI KUNSTSTOFFTEILEN**
METHOD AND DEVICE FOR JOINING AT LEAST TWO PLASTIC PARTS
PROCÉDÉ ET DISPOSITIF POUR ASSEMBLER AU MOINS DEUX PIÈCES EN MATIÈRE PLASTIQUE

(30) Priorität: 07.12.2017 DE 102017011354
(43) Veröffentlichungstag der Anmeldung: 12.08.2020
(73) Patentinhaber: Kocher-Plastik Maschinenbau GmbH, 74429 Sulzbach-Laufen (DE)
(72) Erfinder: KÖPPEL, Karl, 73492 Rainau (DE); MARK, Frank, 71579 Spiegelberg (DE)
(74) Vertreter: Bartels und Partner, Patentanwälte
(86) Internationale Anmeldenummer: PCT/EP2018/082381
(87) Internationale Veröffentlichungsnummer: WO 2019/110328

(56) Entgegenhaltungen:
- EP-A2- 1 219 406
- DE-A1-102013 221 724
- DE-A1-102016 109 985
- FR-A1- 2 888 772
- IT-A1- PR20 100 094
- US-A1- 2005 259 433

## Beschreibung

Die Erfindung betrifft eine Vorrichtung zum Durchführen eines Verfahrens zum Verbinden von mindestens zwei Kunststoffteilen mit den Merkmalen im Oberbegriff von Anspruch 1. Ferner bezieht sich die Erfindung auf ein Verfahren unter Verwendung einer solchen Vorrichtung.

Bei der Herstellung von Kunststoffbehältern für Lebensmittel, Kosmetika oder für medizinische Zwecke, insbesondere Parenteralia oder Substanzen für künstliche Ernährung, ist es im Allgemeinen notwendig, funktionale Elemente mikrobiologisch dicht und unter Vermeidung partikulärer Kontaminationen am betreffenden Behälter anzubringen. Im Stand der Technik werden hierzu durch den Einsatz von Schweißverfahren dichte Schweißverbindungen hergestellt, beispielsweise durch Vibrationsschweißverfahren, Reibschweißen oder Ultraschall-Schweißen. Nachteilig hierbei ist jedoch die Erzeugung von Partikeln durch die dem Schweißprozess immanente Reibung. Beim an sich bekannten Spiegelschweißen kommt es ebenfalls zu Kontaminationen aufgrund von Reibung bei Berührung der zu verschweißenden Komponenten mit dem Heizspiegel. Überdies können hierbei Ablagerungen gebildet werden, die die Schweißqualität stark beeinflussen können.

Die WO 2005/080067 A2 offenbart ein Schweißverfahren zum Verbinden von Kunststoffteilen, bei dem die zu verschweißenden Teile in Kontakt gebracht und danach mit Infrarotstrahlung beheizt und miteinander verschweißt werden. Da die zu verbindenden Teile hierbei im kalten Zustand miteinander in Kontakt gebracht werden, kann auch hierbei die Gefahr der Partikelbildung nicht ausgeschlossen werden. Überdies ist das in diesem Dokument gezeigte Verfahren nur auf Komponenten einfacher Geometrie begrenzt. In DE 20 2006 003 323 U1 ist ein weiteres Verfahren zum Infrarotschweißen von Kunststoffteilen offenbart. Dieses Verfahren ist jedoch auf das nur punktuelle Verschweißen verhältnismäßig dünner, großflächiger Teile begrenzt und ermöglicht keine mikrobiologisch dichte Schweißverbindung.

Die IT PR 2010 0094 A1 beschreibt Vorrichtung zum Durchführen eines Verfahrens zum Verbinden von zwei Kunststoffteilen entlang einer vorgebbaren gemeinsamen Verbindungsstelle unter Einsatz von Infrarotstrahlung, wobei beide miteinander zu verbindenden Kunststoffteile ohne Berührung des anderen Kunststoffteils mittels einer zuordenbaren Strahlungsquelle mit Infrarotstrahlung zumindest entlang der Verbindungsstelle erwärmt werden, wobei die jeweils eine Strahlungsquelle eigenständig und räumlich getrennt von der weiteren Strahlungsquelle betrieben wird, wobei die Strahlungsquellen berührungsfrei und der Kontur der Verbindungsstelle folgend die jeweilige Infrarotstrahlung an das jeweils zuordenbare Kunststoffteil abgeben und wobei der Grad der Erwärmung mittels der jeweiligen Infrarotstrahlung derart gewählt wird, dass beim Zusammenbringen der Kunststoffteile miteinander die Verbindungsstelle gebildet ist, wobei die jeweilige Strahlungsquelle aus einem in einem jeweils zugeordneten Heizelement angeordneten IR-Strahlungselement gebildet ist, das der berührungsfrei zu bestrahlenden Kontur eines zuordenbaren Kunststoffteils nachfolgt.

Weitere Vorrichtungen zum Verbinden von zwei Kunststoffteilen gehen aus der US 2005/0259433 A1, der EP 1 219 406 A2, der DE 10 2016 109 985 A1, der DE 10 2013 221 724 A1 und der FR 2 888 772 A1 hervor. Ausgehend von diesem Stand der Technik liegt der Erfindung die Aufgabe zugrunde, eine Vorrichtung zum Durchführen eines Verfahrens anzugeben, das die Herstellung dichter Schweißverbindungen von Kunststoffteilen ohne mikrobiologische Kontamination und ohne die Gefahr der Partikelbildung ermöglicht.

Erfindungsgemäß ist diese Aufgabe durch eine Vorrichtung gelöst, welche die Merkmale des Patentanspruchs 1 aufweist.

Gemäß dem kennzeichnenden Teil des Anspruchs 1 besteht eine wesentliche Besonderheit der Erfindung darin, dass das jeweilige IR-Strahlungselement mindestens zwei voneinander verschieden orientierte Abstrahlflächen aufweist.

Vorteilhafte Ausgestaltungen der Vorrichtung sind in den weiteren Unteransprüchen 2 bis 7 angegeben.

Es ist beim erfindungsgemäßen Verfahren vorgesehen, dass jedes der miteinander zu verbindenden Kunststoffteile ohne Berührung des jeweils anderen Kunststoffteils mittels einer zuordenbaren Strahlungsquelle mit Infrarotstrahlung zumindest entlang der Verbindungsstelle erwärmt wird, dass die jeweils eine Strahlungsquelle eigenständig und räumlich getrennt von mindestens einer weiteren Strahlungsquelle betrieben wird, dass die Strahlungsquellen berührungsfrei und der Kontur der Verbindungsstelle folgend die jeweilige Infrarotstrahlung an das jeweils zuordenbare Kunststoffteil abgeben und dass der Grad der Erwärmung mittels der jeweiligen Infrarotstrahlung derart gewählt wird, dass beim Zusammenbringen der Kunststoffteile miteinander die Verbindungsstelle gebildet ist. Dadurch, dass die Erwärmung konturnah zur Verbindungsstelle, jedoch berührungsfrei erfolgt, lassen sich auch Teile mit spezieller Geometrie an der Verbindungsstelle mit für die Schweißverbindung optimaler Temperatur aufheizen, so dass beim Zusammenbringen der Teile die Schweißverbindung ohne mikrobiologische Kontamination und partikelfrei gebildet wird.

Die Verbindungsstelle kann als linienförmige Verbindungsnaht ausgebildet werden, und das Zusammenbringen der jeweiligen Kunststoffteile miteinander kann unter einem vorgebbaren Anpressdruck auf diese Teile erfolgen.

Mit Vorteil ist die jeweilige Strahlungsquelle aus einem IR-Strahlungselement gebildet, wobei die eingesetzten IR-Strahlungselemente mit unterschiedlichen Temperaturen betrieben werden, vorzugsweise ein Element bei Temperaturen von 380 °C bis 480 °C, besonders bevorzugt von 400 °C bis 450 °C, und ein jeweils anderes Element bei Temperaturen von 450 °C bis 600 °C, besonders bevorzugt von 500 °C bis 550 °C, bei jeweils einer Anwärmdauer auf das jeweilige Kunststoffteil von bevorzugt etwa 4 Sekunden.

Hierbei wird für material- und/oder geometriebedingt hitzeempfindliche Kunststoffteile eine Kühlung mittels einer Kühleinrichtung durchgeführt.

Mit besonderem Vorteil wird beim Einsatz des erfindungsgemäßen Verfahrens zumindest ein Kunststoffteil nach einem Blasform-, Füll- und Schließverfahren (BFS) als befüllter und verschlossener Behälter hergestellt.

Mit Vorteil wird hierbei der befüllte Behälter von einer Kopfmembran verschlossen und an seinem Halsteil von einem ringförmigen Halskragen umschlossen, der mit einer auf den Behälter seitens seiner Kopfmembran aufgesetzten, das eine Kunststoffteil bildenden Kappe über einen Ringsteg derselben entlang der Verbindungsnaht verbunden wird, wohingegen der Behälter als das andere Kunststoffteil für den Füge- oder Schweißvorgang eingesetzt wird.

Mit besonderem Vorteil wird hierbei zwischen dem Ringsteg der Kappe und dem einen zugehörigen IR-Strahlungselement ein bevorzugter Abstand zwischen 0,2 mm bis 0,6 mm und zwischen dem Halskragen des Behälters und dem anderen zugehörigen Strahlungselement ein Abstand zwischen 0,4 mm bis 0,8 mm gewählt.

Vorzugsweise wird die von der jeweiligen Strahlungsquelle, respektive Strahlungselement, erzeugte Infrarotstrahlung breitbandig und multidirektional abgestrahlt.

Mit besonderem Vorteil wird die Kopfmembran des Behälters in keimzahlreduzierender Weise jedoch anschmelzfrei für den Verbindungsvorgang von Kappe mit Behälter erwärmt.

Die Verbindung von Kappe mit Behälter wird in vorteilhafter Weise mittels Einsatz verschiedener IR-Strahlungsquellen oder -elementen partikelarm durchgeführt.

Nachstehend ist die Erfindung anhand der Zeichnung im Einzelnen erläutert. Es zeigen:
- Fig. 1: eine perspektivische Schrägansicht eines Kunststoffteils in prinzipiell schematischer Form einer dem Stand der Technik entsprechenden Kappe, die durch Schweißen am Halskragen eines Kunststoffbehälters anbringbar ist;
- Fig. 2: eine in perspektivischer Schrägansicht gezeichnete Teildarstellung eines dem Stand der Technik entsprechenden Infusionsbehälters, an dessen Halskragen die Kappe von Fig. 1 anbringbar ist;
- Fig. 3: eine perspektivische Schrägansicht eines Infrarot-Strahlungselements;
- Fig. 4: einen Vertikalschnitt eines das IR-Strahlungselement von Fig. 3 aufweisenden Kappen-Heizelements und der der Strahlung des IR-Strahlungselements ausgesetzten Kappe von Fig. 1;
- Fig. 5: einen vergrößert gezeichneten Teilschnitt des in Fig. 5 mit V bezeichneten Bereichs;
- Fig. 6: eine perspektivische Schrägansicht des Kappen-Heizelements von Fig. 4, gesehen auf das IR-Strahlungselement;
- Fig. 7: eine der Fig. 6 entsprechende perspektivische Schrägansicht, jedoch mit zugeordneter, der IR-Strahlung auszusetzender Kappe von Fig. 1;
- Fig. 8: eine perspektivische Schrägansicht des Infrarot-Strahlungselements eines Behälter-Heizelements;
- Fig. 9: einen schematisch vereinfachten Vertikalschnitt des das IR-Strahlungselement von Fig. 8 enthaltenden Behälter-Heizelements und des oberen Teils des Behälters von Fig. 2, dessen Halskragen der Strahlung des IR-Strahlungselements ausgesetzt ist;
- Fig. 10: einen vergrößert gezeichneten Teilschnitt des in Fig. 9 mit X bezeichneten Bereichs;
- Fig. 11: eine perspektivische Schrägansicht des das IR-Strahlungselements von Fig. 8 aufweisenden Behälter-Heizelements, gesehen auf das IR-Strahlungselement; und
- Fig. 12: eine perspektivische Schrägansicht des Behälter-Heizelements von Fig. 11 und des oberen Endbereichs des Behälters von Fig. 2, der im Bereich seines Halskragens der IR-Strahlung ausgesetzt ist.

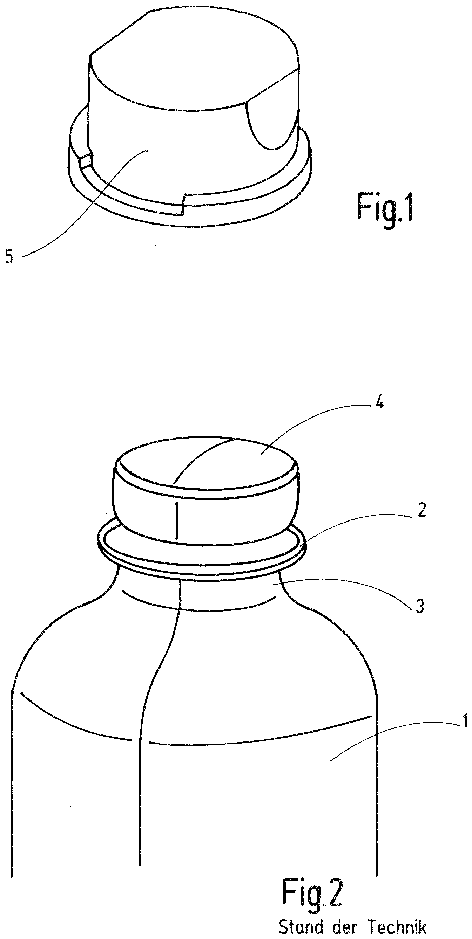

Mit Bezug auf die Zeichnung ist die Erfindung an einem Ausführungsbeispiel näher beschrieben, bei dem durch Infrarotschweißen eine Kappe 5, die in Fig. 1 gesondert vereinfacht dargestellt ist und bei der es sich um eine Infusionskappe nach DIN ISO 15759 aus Kunststoff handelt, am Halskragen 2 eines Behälters 1 angebracht wird. Bei diesem handelt es sich vorliegend um eine Infusionsflasche mit einem Kopf- und Halsbereich nach DIN ISO 15759, die nach dem bekannten BFS-Verfahren hergestellt, befüllt und verschlossen ist. Es versteht sich, dass die Erfindung mit Vorteil gleichermaßen für das Verbinden andersartiger Kunststoffteile durch Verschweißen mittels Infrarotstrahlung anwendbar ist.

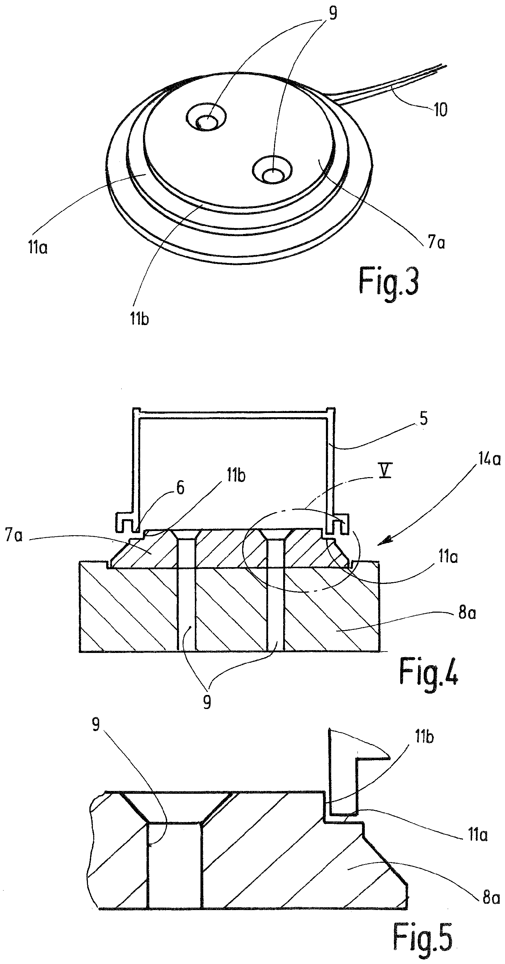

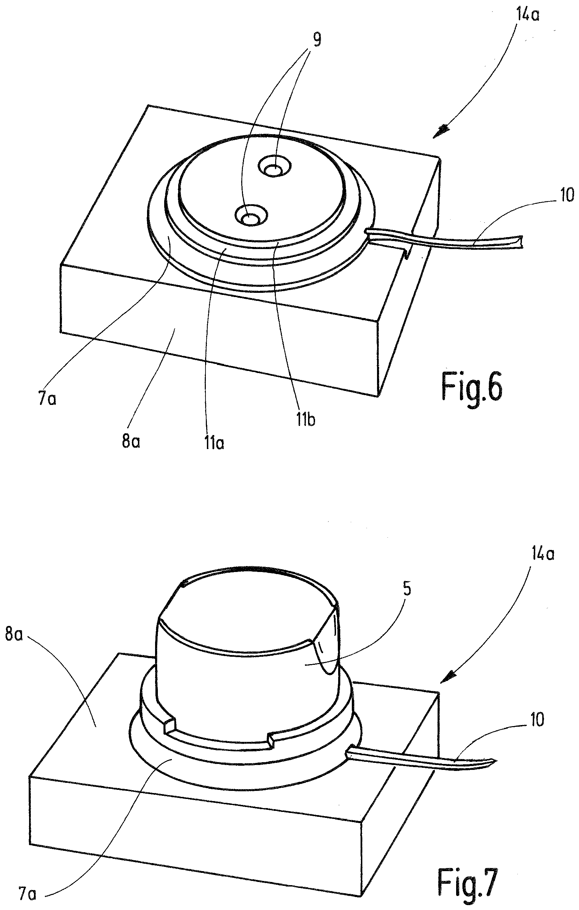

Wie am deutlichsten in Fig. 2 gezeigt, weist der Behälter 1 an seinen Behälterhalsteil 3 anschließend einen radial vorstehenden Halskragen 2 auf, der für den Schweißvorgang die behälterseitige Verbindungsstelle bildet, mit der, siehe Fig. 4, ein am Öffnungsrand der Kappe 5 axial vorstehender Ringsteg 6 verschweißbar ist, der die kappenseitige Verbindungsstelle bildet. Bei angebrachter Kappe 5 an dieser gemeinsamen Verbindungsstelle befindet sich eine den kopfseitigen Verschluss des Behälters 1 bildende, dünne und empfindliche Kopfmembran 4 geschützt im Innenraum der Kappe 5. Für den Schweißvorgang werden die Kappe 5 und der Behälter 1 im Bereich seines Halskragens 2 jeweils für sich mittels Infrarotstrahlung auf die Schweißtemperatur berührungslos erhitzt. Für die Kappe 5 ist hierfür ein Kappen-Heizelement 14a vorgesehen, das in den Fig. 4 bis 7 gezeigt ist und das ein an einer Stirnfläche freiliegendes IR-Strahlungselement 7a aufweist, das mittels Befestigungsbohrungen 9 an einem Isolationskörper 8a angebracht und über einen elektrischen Anschluss 10 mit Energie versorgbar ist. Wie am deutlichsten die Fig. 4 und 5 zeigen, hat das IR-Strahlungselement 7a die Form einer gestuften zylindrischen Scheibe, die für das Beheizen des Ringsteges 6 der Kappe 5 durch IR-Strahlung zwei gestuft zueinander angeordnete Abstrahlungsflächen 11a und 11b aufweist, von denen die Abstrahlungsfläche 11a eine waagerechte Ringfläche und die Abstrahlungsfläche 11b eine senkrechte Ringfläche bildet. Beim Erhitzungsvorgang ist die Kappe 5, wie Fig. 4 und 5 zeigen, derart gehalten, dass sich die Abstrahlungsflächen 11a, 11b konturnah entlang des Ringsteges 6 erstrecken, jedoch von diesem berührungsfrei gehalten sind, wobei der bevorzugte Abstand zwischen Ringsteg 6 und den Flächen 11a, 11b des Strahlungselements 7a 0,2 mm bis 0,6 mm beträgt. Die Fig. 7 zeigt die Anordnung der Kappe 5 in dieser Position am Kappen-Heizelement 14a.

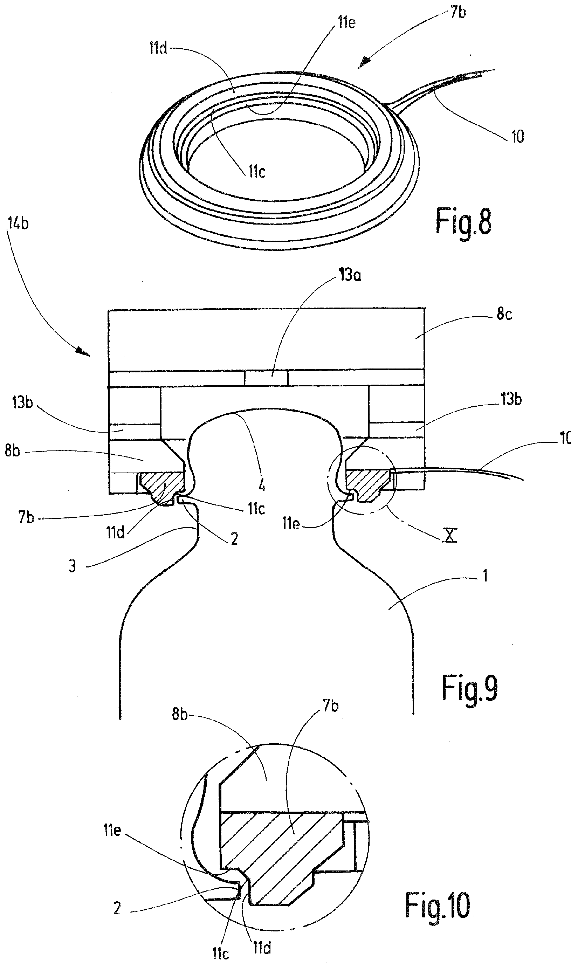

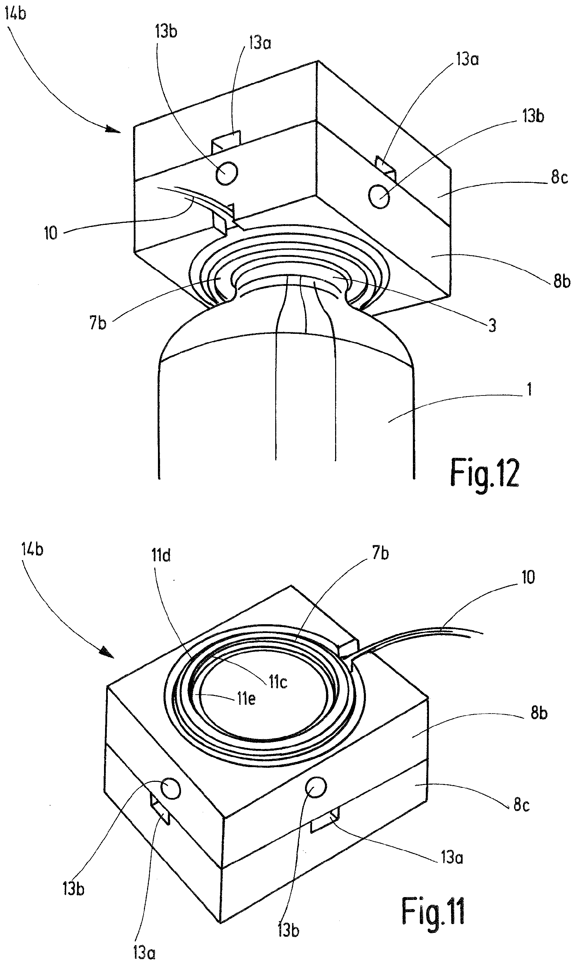

Die Fig. 8 zeigt in gesonderter Darstellung ein IR-Strahlungselement 7b, das zur Erwärmung des Behälters 1 am Halskragen 2 an der freien Stirnfläche eines Behälter-Heizelements 14b angebracht ist, das in den Fig. 9 bis 12 dargestellt ist. Das für den Behälter 1 vorgesehene IR-Strahlungselement 7b hat die Form eines Ringkörpers mit gestuften Innenflächen, die Abstrahlungsflächen 11c, 11d und 11e bilden, die beim Erwärmungsvorgang konturnah, jedoch berührungsfrei, zum Bereich des Halskragens 2 des Behälters 1 gehalten sind, wie dies in Fig. 9 und am deutlichsten in Fig. 10 dargestellt ist. Wie gezeigt, bildet hierbei die Abstrahlungsfläche 11e eine waagerechte Ringfläche, die Abstrahlungsfläche 11c eine hierzu im Winkel von 45° geneigte Ringfläche und die Abstrahlungsfläche 11d eine senkrechte Ringfläche. Wie Fig. 9, 11 und 12 zeigen, weist das Behälter-Heizelement 14b zwei Isolationskörper 8b und 8c auf, von denen der Isolationskörper 8b die Form eines Ringkörpers besitzt, an dem das IR-Strahlungselement 7b die eine Ringöffnung umgibt und die andere Ringöffnung durch den eine Abschlussplatte bildenden anderen Isolationskörper 8c geschlossen ist. Beim Erhitzungsvorgang ist das IR-Strahlungselement 7b durch den Isolationskörper 8b zum Halskragen 2 des Behälters 1 in der Weise berührungsfrei gehalten, wie dies in Fig. 9 und 10 gezeigt ist, wobei sich das obere Endteil des Behälters 1 mit der Kopfmembran 4 in den vom Isolationskörper 8b gebildeten Innenraum erstreckt, der vom zweiten Isolationskörper 8c nach oben geschlossen ist. Wie Fig. 9 zeigt, befinden sich bei dieser Positionierung die Kopfmembran 4 von den Isolationskörpern 8b und 8c in einem Mindestabstand, der 5 mm, bevorzugt 8 mm und besonders bevorzugt 10 mm beträgt. Der Abstand der Abstrahlungsflächen 11c, 11d und 11e zum Halskragen 2 ist hierbei gering eingestellt, typischerweise auf den Bereich von 0,4 mm bis 0,8 mm.

Bevorzugt sind für den Heizvorgang die IR-Strahlungselemente 7a und 7b auf unterschiedliche Temperaturen eingestellt, die beim Strahlungselement 7a im Bereich von 380 °C bis 480 °C und beim IR-Strahlungselement 7b bei 450 °C bis 600 °C liegen, wobei die typische Anwärmdauer ca. 4 Sekunden beträgt. Um die sehr dünne und deshalb auch thermisch empfindliche Kopfmembran 4 des Behälters 1 nur oberflächlich und damit vorteilhaft keimzahlreduzierend anzuwärmen ohne jedoch eine Beschädigung, beispielsweise durch Anschmelzen, zu verursachen, erfolgt bei der Erwärmung des Halskragens 2 des Behälters 1 eine aktive, geregelte Kühlung der Kopfmembran 4 durch Einbringen von vorzugsweise sterilfiltrierter, partikelarmer Kühlluft als Kühlmedium über symmetrisch angeordnete Kühlluft-Eintrittskanäle 13b in den Raum zwischen den Isolationskörpern 8b und 8c oberhalb der Kopfmembran 4. Der Austritt der erwärmten Luft erfolgt über Kühlluftaustrittskanäle 13a, die wie die Eintrittskanäle 13b in den Fig. 9, 11 und 12 gezeigt sind. Durch gesteuerte Kühlluftzufuhr kann während der Tätigkeit des IR-Strahlungselements 7b eine vorteilhafte Oberflächentemperatur der Kopfmembran 4 von ca. 250 °C bis 300 °C kurzfristig erreicht werden. Im Gegensatz zum Heizelement 14b für den Behälter 1 ist das Heizelement 14a für die Kappe 5 nicht aktiv gekühlt oder gespült. Dadurch ist eine Erwärmung der Innenoberfläche der Kappe 5 sichergestellt, was ebenfalls zu einer Reduzierung der Keime an dieser Oberfläche führt.

## Patentansprüche

1. Vorrichtung zum Durchführen eines Verfahrens zum Verbinden von zwei Kunststoffteilen (1, 5) entlang einer vorgebbaren gemeinsamen Verbindungsstelle unter Einsatz von Infrarotstrahlung (IR), wobei beide miteinander zu verbindenden Kunststoffteile (1, 5) ohne Berührung des anderen Kunststoffteils (1, 5) mittels einer zuordenbaren Strahlungsquelle mit Infrarotstrahlung zumindest entlang der Verbindungsstelle erwärmt werden, wobei die jeweils eine Strahlungsquelle eigenständig und räumlich getrennt von der weiteren Strahlungsquelle betrieben wird, wobei die Strahlungsquellen berührungsfrei und der Kontur der Verbindungsstelle folgend die jeweilige Infrarotstrahlung an das jeweils zuordenbare Kunststoffteil (1, 5) abgeben und wobei der Grad der Erwärmung mittels der jeweiligen Infrarotstrahlung derart gewählt wird, dass beim Zusammenbringen der Kunststoffteile (1, 5) miteinander die Verbindungsstelle gebildet ist, die Vorrichtung ist dabei derart ausgebildet, dass die jeweilige Strahlungsquelle aus einem, in einem jeweils zugeordneten Heizelement (14a, 14b) angeordneten, IR-Strahlungselement (7a, 7b) gebildet ist, das der berührungsfrei zu bestrahlenden Kontur eines zuordenbaren Kunststoffteils (1, 5) nachfolgt, und **dadurch gekennzeichnet, dass** das jeweilige IR-Strahlungselement (7a, 7b) mindestens zwei voneinander verschieden orientierte Abstrahlflächen (11a, 11b, 11c, 11d, 11e) aufweist.

2. Vorrichtung nach Anspruch1, **dadurch gekennzeichnet, dass** die Abstrahlflächen (11a, 11b) des einen IR-Strahlungselements (7a), das für die Kappe (5) vorgesehen ist, zu deren Aufsetzrichtung parallel (11b) und senkrecht (11a) dazu verlaufend angeordnet sind.

3. Vorrichtung nach Anspruch 1 oder 2, **dadurch gekennzeichnet, dass** die Abstrahlflächen (11c, 11d, 11e) des anderen IR-Strahlungselements (7b), das für den Halskragen (2) des senkrecht aufgestellten Behälters (1) eingesetzt ist, zu dessen Längsachse parallel (11d) sowie waagerecht (11e) verlaufend und mit einer dritten, hierzu in einem Abstrahlwinkel von vorzugsweise 45° geneigten Abstrahlfläche (11c) angeordnet sind.

4. Vorrichtung nach einem der Ansprüche 1 bis 3, **dadurch gekennzeichnet, dass** die einzelnen Abstrahlflächen (11a, 11b, 11c, 11d, 11e) der beiden IR-Strahlungselemente (7a, 7b) sich durchgehend ringförmig in konzentrischer Weise um deren jeweilige Längsachse erstrecken.

5. Vorrichtung nach einem der Ansprüche 1 bis 4, **dadurch gekennzeichnet, dass** das für den Halskragen (2) des Behälters (1) vorgesehene IR-Strahlungselement (7b) eine Kühleinrichtung (12, 13a, 13b) aufweist, die die Kopfmembran (4) des Behälters (1) mit Kühlluft kühlt, die einem Kühlraum (12) oberhalb der Kopfmembran (4) zuführbar ist, in den für einen Kühl- und/oder Anwärmvorgang des Halskragens (2) die Kopfmembran (4) hineinragt.

6. Vorrichtung nach einem der Ansprüche 1 bis 5, **dadurch gekennzeichnet, dass** das das IR-Strahlungselement (7b) aufweisende Heizelement (14b) zumindest zusätzlich über mindestens eine Halte- und Isoliereinrichtung (8a, 8b) verfügt, die einen Mindestabstand zur Kopfmembran (4) des Behälters (1) von mindestens 5 mm, bevorzugt von mindestens 8 mm, und besonders bevorzugt von mindestens 10 mm besitzt.

7. Vorrichtung nach einem der Ansprüche 1 bis 6, **dadurch gekennzeichnet, dass** das jeweilige IR-Strahlungselement (7a, 7b) über eine Zustelleinrichtung auf das jeweils zugeordnete Kunststoffteil (1, 5) zustellbar und nach der Wärmebehandlung wieder entfernbar ist.

8. Verfahren zum Verbinden von zwei Kunststoffteilen (1, 5) entlang einer vorgebbaren gemeinsamen Verbindungsstelle unter Einsatz von Infrarotstrahlung (IR) unter Verwendung einer Vorrichtung nach einem der vorstehenden Ansprüche, wobei beide miteinander zu verbindenden Kunststoffteile (1, 5) ohne Berührung des anderen Kunststoffteils (1, 5) mittels einer zuordenbaren Strahlungsquelle mit Infrarotstrahlung zumindest entlang der Verbindungsstelle erwärmt werden, wobei die jeweils eine Strahlungsquelle eigenständig und räumlich getrennt von der weiteren Strahlungsquelle betrieben wird, wobei die Strahlungsquellen berührungsfrei und der Kontur der Verbindungsstelle folgend die jeweilige Infrarotstrahlung an das jeweils zuordenbare Kunststoffteil (1, 5) abgeben und wobei der Grad der Erwärmung mittels der jeweiligen Infrarotstrahlung derart gewählt wird, dass beim Zusammenbringen der Kunststoffteile (1, 5) miteinander die Verbindungsstelle gebildet ist.

9. Verfahren nach Anspruch 8, **dadurch gekennzeichnet, dass** die Verbindungsstelle als linienförmige Verbindungsnaht ausgebildet wird und dass das Zusammenbringen der jeweiligen Kunststoffteile (1, 5) miteinander unter einem vorgebbaren Anpressdruck auf diese Teile (1, 5) erfolgt.

10. Verfahren nach Anspruch 8 oder 9, **dadurch gekennzeichnet, dass** die jeweilige Strahlungsquelle aus einem IR-Strahlungselement (7a, 7b) gebildet wird und dass die eingesetzten IR-Strahlungselemente (7a, 7b) mit unterschiedlichen Temperaturen betrieben werden, vorzugsweise ein Element (7a) bei Temperaturen von 380 °C bis 480 °C, besonders bevorzugt von 400 °C bis 450 °C, und ein jeweils anderes Element (7b) bei Temperaturen von 450 °C bis 600 °C, besonders bevorzugt von 500 °C bis 550 °C, bei jeweils einer Anwärmdauer auf das jeweilige Kunststoffteil (1, 5) von 2 bis 6 Sekunden, bevorzugt etwa 4 Sekunden.

11. Verfahren nach einem der Ansprüche 8 bis 10, **dadurch gekennzeichnet, dass** für hitzeempfindliche Kunststoffteile (1, 5) eine Kühlung mittels einer Kühleinrichtung (13a, 13b), bevorzugt mit einem partikelarmen Gas, besonders bevorzugt mit einem partikelarmen und sterilfiltrierten Gas, als Kühlmedium durchgeführt wird.

12. Verfahren nach einem der Ansprüche 8 bis 11, **dadurch gekennzeichnet, dass** zumindest ein Kunststoffteil (1) nach einem Blasform-, Füll- und Schließverfahren als befüllter und verschlossener Behälter (1) hergestellt wird.

13. Verfahren nach Anspruch 12, **dadurch gekennzeichnet, dass** der befüllte Behälter (1) von einer Kopfmembran (4) verschlossen und an seinem Halsteil (3) von einem ringförmigen Halskragen (2) umschlossen wird, der mit einer auf den Behälter (1) seitens seiner Kopfmembran (4) aufgesetzten, das eine Kunststoffteil bildenden Kappe (5) über einen Ringsteg (6) derselben entlang der Verbindungsnaht verbunden wird, wohingegen der Behälter (1) als das andere Kunststoffteil für den Füge- oder Schweißvorgang eingesetzt wird.

14. Verfahren nach Anspruch 13, **dadurch gekennzeichnet, dass** zwischen dem Ringsteg (6) der Kappe (5) und dem einen zugehörigen IR-Strahlungselement (7a) ein bevorzugter Abstand zwischen 0,2 mm bis 0,6 mm und zwischen dem Halskragen (2) des Behälters (1) und dem anderen zugehörigen IR-Strahlungselement (7b) ein Abstand zwischen 0,4 mm bis 0,8 mm gewählt wird.

15. Verfahren nach einem der Ansprüche 8 bis 14, **dadurch gekennzeichnet, dass** die von der jeweiligen Strahlungsquelle, respektive IR-Strahlungselement (7a, 7b), erzeugte Infrarotstrahlung breitbandig und multidirektional abgestrahlt wird.

16. Verfahren nach einem der Ansprüche 8 bis 15, **dadurch gekennzeichnet, dass** die Kopfmembran (4) des Behälters (1) in keimzahlreduzierender Weise und anschmelzfrei für den Verbindungsvorgang von Kappe (5) mit Behälter (1) erwärmt wird.

17. Verfahren nach einem der Ansprüche 8 bis 16, **dadurch gekennzeichnet, dass** die Verbindung von Kappe (5) mit Behälter (1) mittels Einsatz verschiedener IR-Strahlungsquellen oder-elementen (7a, 7b) partikelarm durchgeführt wird.

## Claims

1. Device for carrying out a method for joining two plastic parts (1, 5) along a predefinable common joint using infrared radiation (IR), wherein both plastic parts (1, 5) to be joined together are heated at least along the joint without contacting the other plastic part (1, 5) by means of an assignable radiation source with infrared radiation, wherein the respective one radiation source is operated independently and spatially separated from the further radiation source, wherein the radiation sources emit the respective infrared radiation to the respectively assignable plastic part (1, 5) without contact and following the contour of the joint and wherein the degree of heating by means of the respective infrared radiation is selected in such a manner that, when the plastic parts (1, 5) are brought together, the joint is formed, the device being configured in such a manner that the respective radiation source is formed of an IR radiation element (7a, 7b) which is arranged in a respectively associated heating element (14a, 14b) and follows the contour to be irradiated without contact of an assignable plastic part (1, 5), and **characterised in that** the respective IR radiation element (7a, 7b) has at least two radiating surfaces (11a, 11b, 11c, 11d, 11e) oriented differently from each other.

2. Device according to claim 1, **characterised in that** the radiating surfaces (11a, 11b) of the one IR radiation element (7a), which is provided for the cap (5), are arranged extending parallel (11b) and perpendicular (11a) to their attachment direction.

3. Device according to claim 1 or 2, **characterised in that** the radiating surfaces (11c, 11d, 11e) of the other IR radiation element (7b), which is used for the collar (2) of the vertically positioned container (1), are arranged extending parallel (11d) as well as horizontal (11e) to the longitudinal axis thereof and with a third radiating surface (11c) inclined thereto at a radiating angle of preferably 45°.

4. Device according to one of claims 1 to 3, **characterised in that** the individual radiating surfaces (11a, 11b, 11c, 11 d, 11e) of the two IR radiation elements (7a, 7b) extend continuously in a circular shape in a concentric manner about their respective longitudinal axis.

5. Device according to one of claims 1 to 4, **characterised in that** the IR radiation element (7b) provided for the collar (2) of the container (1) has a cooling device (12, 13a, 13b) which cools the head membrane (4) of the container (1) with cooling air which can be supplied to a cooling space (12) above the head membrane (4) into which the head membrane (4) protrudes for a cooling and/or heating process of the collar (2).

6. Device according to one of claims 1 to 5, **characterised in that** the heating element (14b) comprising the IR radiation element (7b) has at least additionally at least one holding and insulating device (8a, 8b) which has a minimum distance from the head membrane (4) of the container (1) of at least 5 mm, preferably of at least 8 mm, and particularly preferably of at least 10 mm.

7. Device according to one of claims 1 to 6, **characterised in that** the respective IR radiation element (7a, 7b) can be fed to the respectively assigned plastic part (1, 5) via a feed device and can be removed again after the heat treatment.

8. Method for joining two plastic parts (1, 5) along a predefinable common joint using infrared radiation (IR) while employing a device according to one of the preceding claims, wherein both plastic parts (1, 5) to be joined together are heated at least along the joint without contacting the other plastic part (1, 5) by means of an assignable radiation source with infrared radiation, wherein the respective one radiation source is operated independently and spatially separated from the further radiation source, wherein the radiation sources emit the respective infrared radiation to the respectively assignable plastic part (1, 5) without contact and following the contour of the joint and wherein the degree of heating by means of the respective infrared radiation is selected in such a manner that, when the plastic parts (1, 5) are brought together, the joint is formed.

9. Method according to claim 8, **characterised in that** the joint is configured as a linear joining seam and **in that** bringing together of the respective plastic parts (1, 5) takes place under a predefinable contact pressure on these parts (1, 5).

10. Method according to claim 8 or 9, **characterised in that** the respective radiation source is formed of an IR radiation element (7a, 7b) and **in that** the IR radiation elements (7a, 7b) used are operated with different temperatures, preferably one element (7a) at temperatures of 380 °C to 480 °C, particularly preferably 400 °C to 450 °C, and a respective other element (7b) at temperatures of 450 °C to 600 °C, particularly preferably 500 °C to 550 °C, with a heating duration in each case on the respective plastic part (1, 5) of 2 to 6 seconds, preferably approximately 4 seconds.

11. Method according to one of claims 8 to 10, **characterised in that** for heat-sensitive plastic parts (1, 5) cooling is carried out by means of a cooling device (13a, 13b), preferably with a low-particle gas, particularly preferably with a low-particle and sterile-filtered gas, as the cooling medium.

12. Method according to one of claims 8 to 11, **characterised in that** at least one plastic part (1) is produced as a filled and sealed container (1) according to a blow moulding, filling and sealing method.

13. Method according to claim 12, **characterised in that** the filled container (1) is sealed by a head membrane (4) and is enclosed on its neck part (3) by an annular collar (2), which is joined to a cap (5) that forms the one plastic part, which is placed on the container (1) on the side of its head membrane (4) via an annular flange (6) of said cap along the joining seam, whereas the container (1) is used as the other plastic part for the joining or welding operation.

14. Method according to claim 13, **characterised in that** a preferred distance between 0.2 mm and 0.6 mm is selected between the annular flange (6) of the cap (5) and the one associated IR radiation element (7a) and a distance between 0.4 mm and 0.8 mm is selected between the collar (2) of the container (1) and the other associated IR radiation element (7b).

15. Method according to one of claims 8 to 14, **characterised in that** the infrared radiation generated by the respective radiation source, or IR radiation element (7a, 7b), is emitted in a broadband and multi-directional manner.

16. Method according to one of claims 8 to 15, **characterised in that**, the head membrane (4) of the container (1) is heated in a germ count-reducing manner and without melting for the process of joining the cap (5) to the container (1).

17. Method according to one of claims 8 to 16, **characterised in that** the joining of cap (5) to container (1) is carried out in a low-particle manner by using various IR radiation sources or elements (7a, 7b).

## Revendications

1. Dispositif pour effectuer un procédé de jonction de deux pièces (1, 5) en matière plastique le long d'un endroit de jonction commun pouvant être donné à l'avance, en utilisant du rayonnement infrarouge (IR), dans lequel on chauffe les deux pièces (1, 5) en matière plastique à joindre l'une à l'autre sans contact de l'autre pièce (1, 5) en matière plastique au moyen d'une source de rayonnement, lui appartenant, par du rayonnement infrarouge au moins le long de l'endroit de la jonction, dans lequel on fait fonctionner la une source de rayonnement respective de manière autonome et séparée dans l'espace de l'autre source de rayonnement, dans lequel les sources de rayonnement donnent le rayonnement infrarouge respectif sans contact et en suivant le contour de l'endroit de jonction à la pièce (1, 5) en matière plastique respectif lui appartenant et dans lequel on choisit le degré du chauffage au moyen du rayonnement infrarouge respectif de manière à former l'endroit de jonction à la réunion des pièces (1, 5) en matière plastique l'une avec l'autre, le dispositif étant à cet effet constitué de manière à ce que la source de rayonnement respective soit formée d'un élément (7a, 7b) de rayonnement IR, qui est disposé dans un élément (14a, 14b) de chauffage respectivement associé et qui suit le contour, à exposer au rayonnement sans contact, d'une pièce (1, 5) en matière plastique lui appartenant, et **caractérisé en ce que**
l'élément (7a, 7b) respectif de rayonnement IR a au moins deux surfaces (11a, 11b, 11c, 11d, 11e) de rayonnement orientées différemment l'une de l'autre.

2. Dispositif suivant la revendication 1, **caractérisé en ce que** les surfaces (11a, 11b) de rayonnement du un élément (7a) de rayonnement IR, qui est prévu pour le capuchon (5), sont disposées parallèlement (11b) à sa direction de pose et perpendiculairement (11a) à cela.

3. Dispositif suivant la revendication 1 ou 2, **caractérisé en ce que** les surfaces (11c, 11d, 11e) de rayonnement de l'autre élément (7b) de rayonnement IR, qui est utilisé pour la collerette (2) de col du récipient (1) posé verticalement, sont disposés en s'étendant parallèlement (11d) à son axe longitudinal ainsi qu'horizontalement (11e) et comprenant une troisième surface (11c) de rayonnement inclinée par rapport à cela suivant un angle de rayonnement, de préférence de 45°.

4. Dispositif suivant l'une des revendications 1 à 3, **caractérisé en ce que** les diverses surfaces (11a, 11b, 11c, 11d, 11e) de rayonnement des deux éléments (7a, 7b) de rayonnement IR s'étendent d'une manière continue annulairement d'une façon concentrique autour de leur axe longitudinal respectif.

5. Dispositif suivant l'une des revendications 1 à 4, **caractérisé en ce que** l'élément (7b) de rayonnement IR, prévu pour la collerette (2) de col du récipient (1), a un dispositif (12, 13a, 13b) de refroidissement, qui refroidit la membrane (4) de tête du récipient (1) par de l'air de refroidissement, qui peut être apporté à un espace (12) de refroidissement au-dessus de la membrane (4) de la tête, dans lequel la membrane (4) de tête pénètre pour une opération de refroidissement et/ou de tiédissement dans la collerette (2) du col.

6. Dispositif suivant l'une des revendications 1 à 5, **caractérisé en ce que** l'élément (14b) de chauffage ayant au moins l'élément (7b) de rayonnement IR dispose au moins en outre d'au moins un dispositif (8a, 8b) de maintien et d'isolation, qui possède une distance minimum à la membrane (4) de tête du récipient (1) d'au moins 5 millimètres, de préférence d'au moins 8 millimètres, et d'une manière particulièrement préférée d'au moins 10 millimètres.

7. Dispositif suivant l'une des revendications 1 à 6, **caractérisé en ce que** l'élément (7a, 7b) respectif de rayonnement IR peut être amené par un dispositif d'amenée sur la pièce (1, 5) en matière plastique respective associée et être retiré après le traitement thermique.

8. Procédé de jonction de deux pièces (1, 5) en matière plastique le long d'un endroit de jonction commun pouvant être donné à l'avance en mettant en œuvre du rayonnement infrarouge (IR) en utilisant un dispositif suivant l'une des revendications précédentes, dans lequel on chauffe les deux pièces (1, 5) en matière plastique à joindre l'une à l'autre sans contact de l'autre pièce (1, 5) en matière plastique au moyen d'une source de rayonnement lui appartenant, par du rayonnement infrarouge au moins le long de l'endroit de jonction, dans lequel on fait fonctionner la respectivement une source de rayonnement de manière autonome et d'une manière séparée dans l'espace de l'autre source de rayonnement, dans lequel les sources de rayonnement donnent sans contact et en suivant le contour de l'endroit de jonction le rayonnement infrarouge respectif à la pièce (1, 5) en matière plastique lui appartenant respectivement et, dans lequel on choisit le degré du chauffage au moyen du rayonnement infrarouge respectif de manière à former l'endroit de liaison à la réunion des pièces (1, 5) en matière plastique l'une à l'autre.

9. Procédé suivant la revendication 8, **caractérisé en ce que** l'on constitue l'endroit de jonction sous la forme d'un cordon de jonction linéaire et **en ce que** la réunion des pièces (1, 5) de matière plastique respective l'une à l'autre s'effectue sous une pression d'application pouvant être donnée à l'avance sur ces pièces (1, 5).

10. Procédé suivant la revendication 8 ou 9, **caractérisé en ce que** l'on forme la source de rayonnement respective à partir d'un élément (7a, 7b) de rayonnement IR et **en ce que** l'on fait fonctionner des éléments (7a, 7b) de rayonnement IR utilisés à des températures différentes en ayant, de préférence un élément (7a) à des températures de 380°C à 480°C, d'une manière particulièrement préférée de 400°C à 450°C, et un autre élément (7b) respectif à des températures de 450°C à 600°C, d'une manière particulièrement préférée de 500°C à 550°C, en ayant respectivement une durée de tiédissement sur la pièces (1, 5) en matière plastique respective de 2 à 6 secondes, de préférence d'environ 4 secondes.

11. Procédé suivant l'une des revendications 8 à 10, **caractérisé en ce que** pour des pièces (1, 5) en matière plastique sensibles à la chaleur, on effectue un refroidissement au moyen d'un dispositif (13a, 13b) de refroidissement, de préférence par un gaz pauvre en particules, d'une manière particulièrement préférée par un gaz pauvre en particules, et filtré de manière stérile comme fluide de refroidissement.

12. Procédé suivant l'une des revendications 8 à 11, **caractérisé en ce que** l'on fabrique une pièce (1) en matière plastique sous la forme d'un récipient (1) rempli et fermé par un procédé de moulage par soufflage, remplissage et fermeture.

13. Procédé suivant la revendication 12, **caractérisé en ce que** l'on ferme le récipient (1) rempli par une membrane (4) de tête et on l'entoure à sa partie (3) de col par une collerette (2) annulaire de col que l'on joint à un capuchon (5), posé sur le récipient (1) du côté de sa membrane (4) de tête et formant la une pièce en matière plastique, par une nervure (6) annulaire de celui-ci le long du cordon de jonction, tandis que l'on utilise le récipient (1) comme l'autre pièce en matière plastique pour l'opération de jonction ou de soudure.

14. Procédé suivant la revendication 13, **caractérisé en ce que** entre la nervure (6) annulaire du capuchon (5) et l'élément (7a) de rayonnement IR associé, on choisit une distance préférée comprise entre 0,2 mm à 0,6 mm et entre la collerette (2) du col du récipient (1) et l'autre élément (7b) de rayonnement IR associé une distance comprise entre 0,4 mm à 0,8 mm.

15. Procédé suivant l'une des revendications 8 bis 14, **caractérisé en ce que** le rayonnement infrarouge produit par la source de rayonnement respectif, respectivement l'élément (7a, 7b), de rayonnement IR, est à bande large, et multidirectionnelle.

16. Procédé suivant l'une des revendications 8 bis 15, **caractérisé en ce que** l'on réchauffe la membrane (4) de tête du récipient (1), de façon à réduire le nombre de germes et sans fusion, pour l'opération de jonction du capuchon (5) au récipient (1).

17. Procédé suivant l'une des revendications 8 bis 16, **caractérisé en ce que**, l'effectue, d'une manière pauvre en particules, la jonction du capuchon (5) au récipient (1), en utilisant diverses sources ou éléments (7a, 7b) de rayonnement IR.
